# EUROPEAN PATENT SPECIFICATION

(11) **EP 0 398 030 B1**
(45) Date of publication and mention of the grant of the patent: **19.10.1994**
(21) Application number: 90107331.2
(22) Date of filing: 18.04.1990
(51) Int. Cl.: B23Q 1/00, B23Q 7/14

(54) **Connector device for machine tool**
Anschlussvorrichtung für Werkzeugmaschine
Connecteur pour machine-outil

(30) Priority: 17.05.1989 JP 123768/89
(43) Date of publication of application: 22.11.1990
(73) Proprietor: TSUDAKOMA KOGYO KABUSHIKI KAISHA, Kanazawa-shi Ishikawa-Ken (JP)
(72) Inventor: Kuse, Hisao, Kahoku-gun, Ishikawa-ken (JP)
(74) Representative: Tiedtke, Harro, Dipl.-Ing.

(56) References cited:
- DE-A- 1 929 873
- DE-A- 2 838 686
- DE-A- 3 309 555
- US-A- 4 156 551
- PATENT ABSTRACTS OF JAPAN vol. 5, no. 155 (M-90)(827), 30 September 1981 ; & JP-A-56082157 (HITACHI SEIKI) 04.07.1981
- PATENT ABSTRACTS OF JAPAN vol. 10, no. 311 (M-528)(2367), 23 October 1986; & JP - A - 61123444 (SINTOKOGIO) 11.06.1986

## Description

This invention relates to a connector device for a machine tool which can move and connect a pallet loaded with an attachment such as automatic index head on the side of the machine tool and can operate the attachment without hindrance. Such a connector device according to the preamble of claim 1 is shown in DE-OS 1929873.

A pallet changer has its object wherein the pallet changer is combined with an automatic machine tool like a machining center to effect an automatic unmanned operation for many hours, thus improving its service efficiency to enhance productivity. At this time, works are loaded on the pallet and are carried in and out on a processing table of the machine tool. In a case where the processing requires, for example, an angle indexing function, it is necessary to load works on the pallet through a high degree of an attachment such as an automatic index head.

Such an attachment has a drive portion and a detection portion so that a drive signal from an external is inputted into said drive portion, and the result thereof is transmitted to the external as a feed back signal from the detection portion to realize operations such as indexing of a fixed angle. Accordingly, it is necessary to provide an input and output cable or the like between the control device of the machine tool and the attachment, and conventionally, a flexible cable having a length sufficient to reach within the range of movement of the palletis used as a input and output cable.

If two or more input and output cable systems are collectively disposed, there is a possibility for a erroneous function, if it is tried to connected the systems in a wrong manner.

In view of the foregoing, it is an object of the present invention to provide an arrangement wherein even if two or more input and output cable systems are collectively disposed, the cable systems are mutually affected so as not to induce inferior operation and erroneous function.

### Disclosure of the invention

This object is achie by a connecting device with the features of claim 1. Advantageous embodiments are described in the dependent claims. According to the present invention, connector devices with a shield member disposed thereon are employed, whereby one of the connector device connected to a control device through an input and output cable installed on the side of machine-tool table while the other connector device connected to an attachment is installed on the side of a pallet so that when the pallet is carried onto the machine-tool table, these connector devices are connected and the control device and the attachment are connected through the input and output cable while when the pallet is carried out, these connector devices are disengaged and the pallet is disconnected from the control device.

### BRIEF DESCRIPTION OF THE DRAWINGS

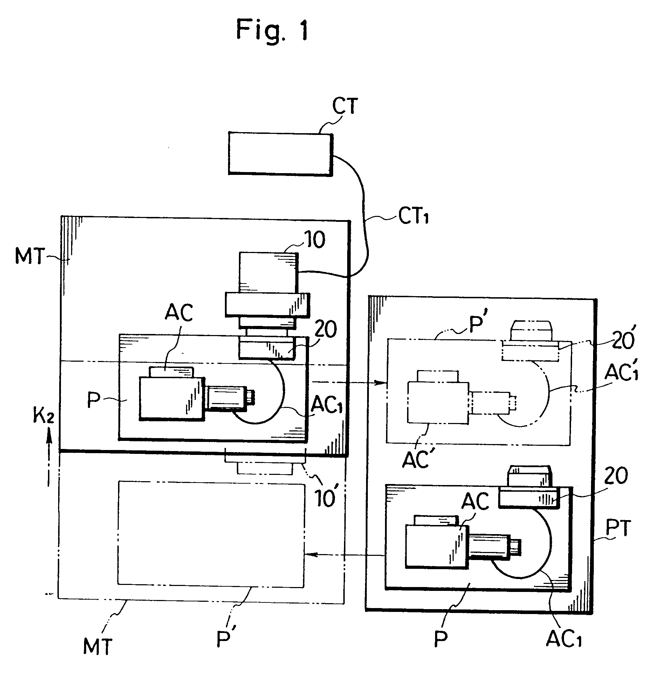

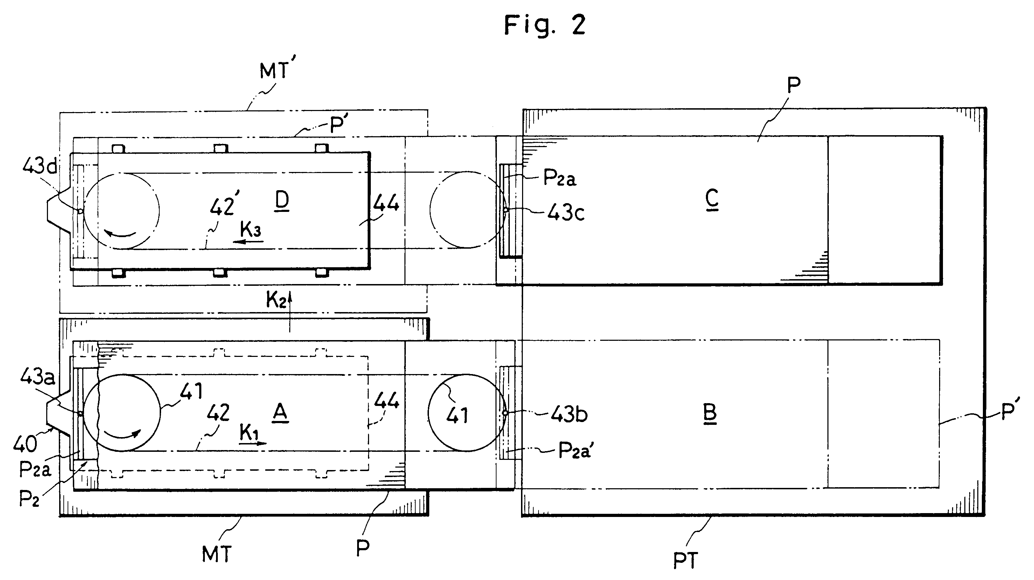

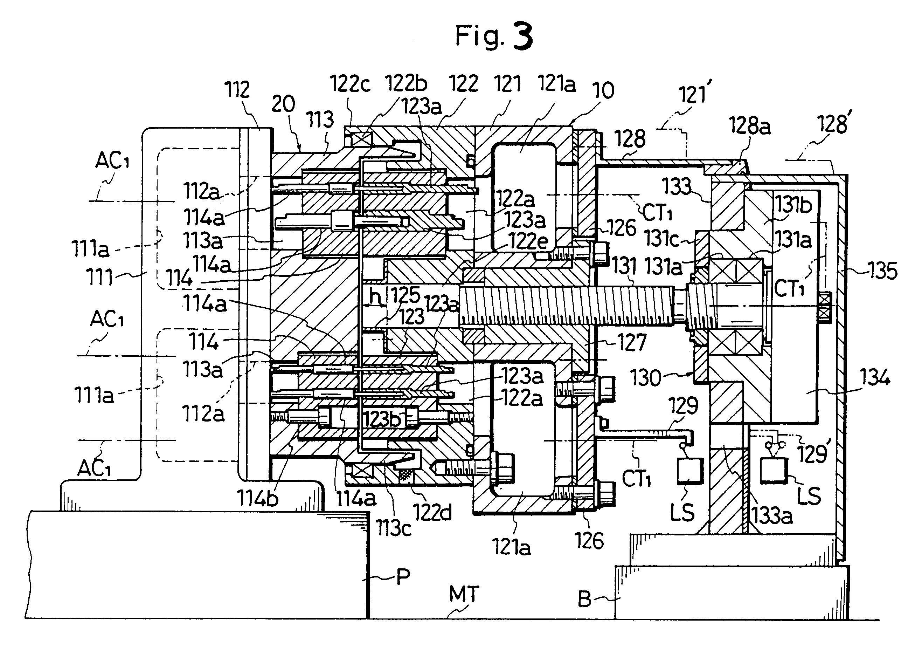

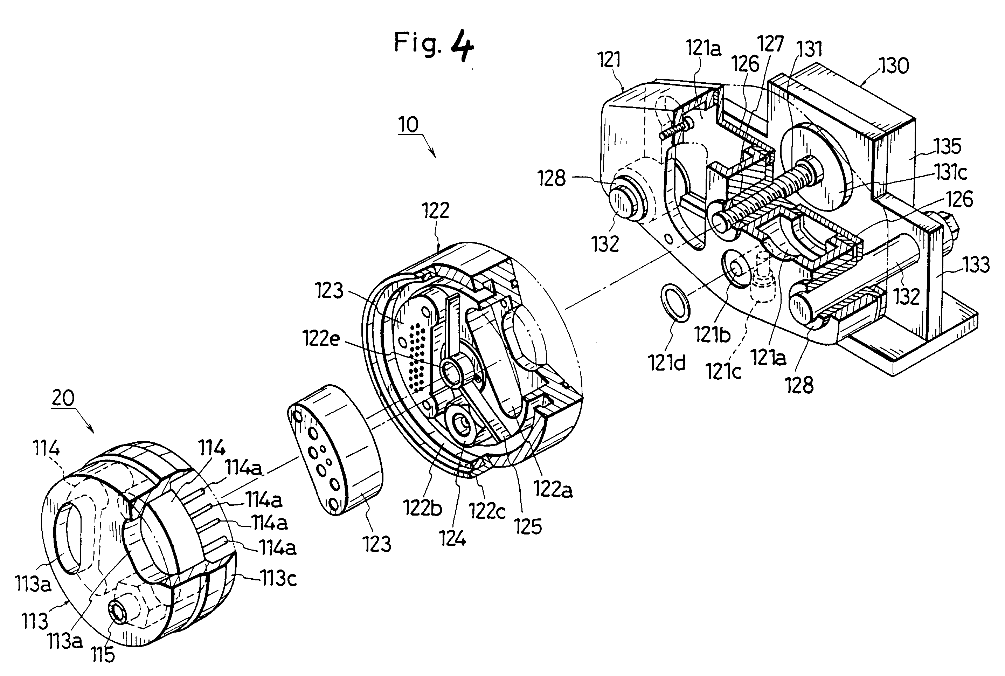

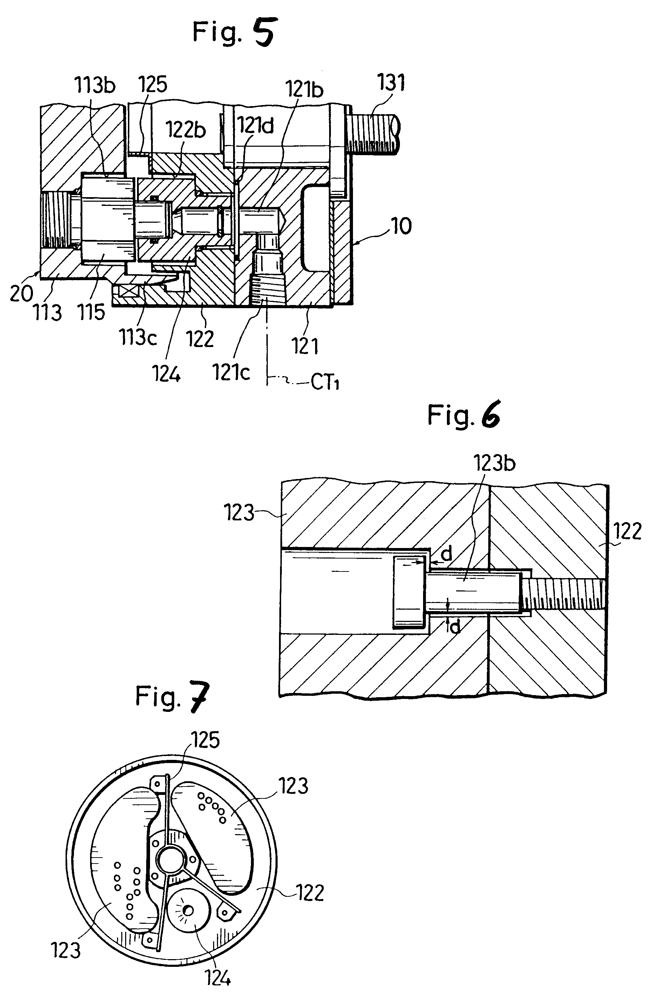

Fig. 1 is an entire conceptual view showing one example of a pallet changing mechanism acording to the present invention; Fig. 2 is a plan view showing one example of a pallet transfer device used in the present invention; Fig. 3 is a side sectional view of the connector device according to the present invention; Fig. 4 is a perspective view of the connector device of Fig. 3; Fig. 5 is a partly enlarged view of Fig. 4; Fig. 6 is a partly enlarged sectional view of Fig. 3; and Fig. 7 is a side view showing another embodiment of the connector device according to the present invention.

### DETAILED DESCRIPTION OF THE INVENTION

The embodiments will be described hereinafter with reference to the drawings. As shown in Fig. 1, a pallet changing mechanism for a machine tool comprises, as principal members, a pallet table PT arranged adjacent to a machining table MT of a machine tool, a movable portion 10 for a connector device disposed on the machining table MT, and fixed portins 20, 20 ... for a connector device provided on each of pallets P.

The machine tool is, for example, a machining center of suitable form. The machining table MT is capable of transferring pallets P at at least different two locations as indicated by the chain-line arrow between the machining table MT and the pallet table PT (the solid line and dash-dotted contour lines in Fig. 1). The pallet table PT has the same height as that of the machining table MT and is a frame capable of loading at least two pallets P, P side by side thereon. The movable portion 10 is connected to a control device CT of a machine tool which will be described later, and the fixed portion 20 is connected to an attachment AC on each pallet.

The transfer operation of pallets P between the machining table MT and the pallet table PT is carried out by use of a pallet transfer device 40 shown in Fig. 2. The pallet transfer device 40 is provided together with a pallet clamp mechanism 44 on the machining table MT.

The pallet transfer device 40 is provided with a pair of chain sprockets 41, 41, an endless drive chain 42 over which the chain sprockets are extended, and an engaging pin 43a projected on a part of the drive chain 42. Here, one chain sprocket 41 is disposed to be projected on the side of the pallet table PT (on the right-hand in the figure).

Each pallet P is formed the front end thereof with an engaging portion P₂ having an engaging groove P₂ₐ on the lower surface side thereof, and the engaging pin 43a is slidably engaged with the engaging groove P₂ₐ. The pallet P carried into a predetermined position on the machining table MT can be mechanically positioned and fixed by the pallet clamp mechanism 44.

Suppose that the pallet P on the machining table MT is at a position A, when the pallet clamp mechanism 44 is opened and the drive chain 42 is driven in a direction as indicated by arrow K₁, the engaging pin 43a moves to a position (shown at 43b) nearest to the pallet table PT, and the pallet P can be transferred from the machining table MT to a positon B on the pallet table PT. Accordingly, the pallet P can be reciprocated between the positions A and B.

When the machining table MT is further moved in a direction indicated by arrow K₂, the engaging pin moved to a position indicated at 43c into engagement with an engaging groove P₂ₐ of another pallet P located at a position C on the pallet table PT. Subsequently, when a drive chain 42′ is driven in a direction indicated by arrow K₃, this pallet P can be transferred to a positon D on the machining table MT, in which case also, the pallet P can be reciprocated between the positions C and D. In pallets P, P' on the pallet table PT, engaging grooves P₂ₐ' P₂ₐ' are orderly arranged, and the engaging pin (positions indicated by 43b or 43c) moved to the pallet table PT may be successively engaged.

The pallet P carried into a predetermined position on the machining table MT by the pallet transfer device 40 in the manner as described above is fixed by the pallet clamp mechanism 44.

On each of the pallets P are disposed an attachment AC like an automatic index head as shown in Fig. 1 and a fixed portion 20 for a connector device, and work not shown is detachably placed on the attachment AC on the pallet table PT. The attachment AC and the fixed portion 20 are connected through a short connecting cable AC₁.

The movable portion 10 for the connector device is provided on the machining table MT and connected to a control device CT of the machine tool through a flexible cable CT₁ having a length capable of covering the moving range of the machining table MT.

For the input and output cable connected in the fixed portion and movable portion, there requires, in addition to a power signal for drive, a low level control signal such as an index instruction signal and an output signal of an index angle sensor. Therefore, various conditions such that a separate shield between both the signals is complete, it can withstand an inferior working environment and the like need be fulfilled. In view of the foregoing, conncector devices shown in Figs. 3 and 4 were developed.

The fixed portion 20 comprises, as principal members, a base member 111, a connector unit 113 secured to the front surface of the base member 111 through a cover plate 112, and a connector block 114 for electricity and a connector block 115 for fluid which are incorporated in the connector unit 113.

The connector blocks 114, 114 for electricity comprise insulating members having connector pins 114a, 114a ... mounted thereof, and are encased in stepped deformed holes 113a, 113a formed on the connector unit 113 and fixed by bolts 114b. The connector pins 114a, 114a ... used have different diameters according to a required capacity of current, and front ends thereof are projected to the front surface of the connector blocks 114, and rear portions thereof extend through the connector blocks 114 into the rear portions of the deformed holes 113a so that the former may be connected to the respective input and output cables AC₁.

The connector block 15 for fluid is also encased in a stepped hole 113b formed in the connector unit 113 (see Fig. 5). The connector block 115 forms a so-called one-touch fluid coupling together with the connector block 124 on the side of the movable portion 10 paired therewith.

The connector unit 113 is a thick disk-like metal member for holding the connector blocks 114, 114, and 115, and a front end edge thereof is formed with a convergent guide ring 113c.

Legs of the base member 111 are secured onto the pallet P to form therein cable connecting spaces 11a and 11a divided for each of the connector blocks 114 and 114. The deformed hole 113a of the connector unit 113 is communicated with the corresponding cable connecting space 11a through a through hale 112a provided in the cover plate 112. The cables AC₁, AC₁ can be extended through and fixed in the cable connecting spaces 11a, 111a. The separate cable AC₁ for fluid can be also extended through the base member 111 and the cover plate 112 through a space not shown independently of the cable connecting spaces 111a and 111a, connected to the connector block 115 for fluid and fixed to the rear surface of the base member 111.

The movable portion 10 comprises, as principal members, a mount member 121, a connector unit 122, connector blocks 123, 123 for electricity, and a connector block 124 for fluid.

The connector blocks 123, 123 for electricity have connector sockets 123a, 123a ... mounted thereon and are paired with the connector blocks 114, 114 on the side of the fixed portion 20.

The connector unit 122 has the connector blocks 123, 123 encased in the stepped deformed holes 122a, 122a, and the connector block 124 encased in the other stepped hole 122b. However, the connector blocks 123, 123 are fastened with suitable clearances d, d through bolts 123b, and secured to the connector unit 122 by a so-called floating construction. A shield member 125 having the same height as a projected height h of the connector blocks 123, 123 is disposed on the front side of the connector unit so as to define the connector blocks 123, 123. The connector unit 122 is formed at the peripheral edge of the front surface thereof with a ring portion 122c for fitting a guide ring 113c of the connector unit 113 on the side of the fixed portion 20.

As shown in Fig. 3, the deformed holes 122a are communicated with the connecting spaces 121a of the mount member 121, and the stepped hole 122b is communicated with a fluid inlet port 121c through a communicating hole 121b formed in the mount member 121. The rear end of the connector block 124 is opened to the communicating hole 121b through an 0-ring 121d as shown in Fig. 5.

The cable connecting spaces 121a, 121a are defined for the connector blocks 123, 123, respectively, and are closed by a cover plate 126 capable of having the flexible cable CT₁ extended therethrough and fixed. A separate flexible cable CT₁ for fluid is connected to the fluid inlet port 121c.

A screw member 127 is mounted in the central portion of the mount member 121 and is threadedly engaged with a ball threaded shaft 131 of the drive unit 130. Guide rods 132, 132 are slidably inserted on both left and right sides of the mount member 21 through bushings 128, 128.

A supersonic motor 134 as a drive source is mounted on the base member 133 of the drive unit 130, and the ball threaded shaft 131 and the guide rods 132, 132 are projected on the front side.

The supersonic motor 134 comprises a stator constituted by attaching an elastic member such as stainless to a ring-like or disk-like piezoelectric element and a rotor in pressure contact with the stator, whereby when the piezoelectric element divided in a peripheral direction for polarization is excited under suitable conditions, only a strain of a travelling wave which travels in a peripheral direction can be produced on the surface of the elastic member, and a torque resulting from a friction between the rotor and the stator is produced in the rotor. The supersonic motor requires no winding and has not magnetic circuit, and therefore a magnetism is not generated. A small and light-weight low-speed high torque can be realized. The motor is excellent in responsiveness and position controlling properties, and has features of high retaining torque, high freedom of shape and the like.

The supersonic motor 134 is connected to the control device CT of the machine tool through the separate flexible cable CT₁.

The ball threaded shaft 131 is directly connected to the rotor not shown of the supersonic motor 134 and rotatably supported on the base member 133 through bearings 131a, 131a, a bearing case 131b and a bearing holder 131c.

A fixed cover 135 is disposed at the rear of the supersonic motor 134. A moving cover 128 is provided on the cover plate 126 of the movable portion 10, the moving cover 128 being slidable with respect to the fixed cover 135 through a seal packing 128a.

Limit switches LS, LS are disposed on both sides of the base member 133 of the drive unit 130, as shown in Fig. 5, and the forward limit and backward limit of the movable portion 10 can be detected by a dog 129 projected at the rear of the movable portion 10. The dog 129 extends through a through hole 133a formed in the base member 133 and can be moved forward and backward together with the movable portion 10.

In the automatic detachable connector device having the structure as described above, the supersonic motor 134 of the drive unit 130 is driven whereby the movable portion 10 can be moved forward and backward through the ball threaded shaft 131. If the fixed portion on the pallet P is set to be accurately confronted by the movable portion 10 when the movable portion 10 is loaded on the machining table MT of the machine tool and the pallet P is carried onto the machining table MT and fixed in position, the supersonic motor 134 is driven by a control signal from the control device CT, whereby the movable portion can be moved forward for contineous connection with the fixed portion 20.

When the fixed portion 20 and the movable portion 10 are connected, connection between the attachment AC on the pallet P and the control device CT can be completed through the cable AC₁, connector blocks 114, 114, 115 of the fixed portion 20, connector blocks 123, 123, 124 of the movable portion 10 and flexible cable CT₁. Accordingly, the control device CT suitably drives and controls the machine tool CT and the attachment AC to execute machining of work on the attachment AC.

After work has been machined, the supersonic motor 134 is driven to separate the movable portion 10 from the fixed portion 20, whereby the pallet P is released from relation with the control device CT and can be carried out of the machining table MT to the pallet table PT.

The connector blocks 114, 114, 123, 123 for electricity including the connecting portions to the cables AC₁, AC₁, flexible cables CT₁, CT₁ to be connected are accommodated in the deformed holes 113a, 113a, 122a, 122a defined for the respective connector blocks 114, 123, and cable connecting spaces 111a, 111a, 121a, 121a in the connector units 113, 122, base member 111 and mount member 121. Since they are defined by the shield member 125 also in the front surface of the connector unit 122 on the side of the movable portion 10, electric signals belonging to the different connector blocks 114, 123 are severely separately shielded from each other. Therefore, even in the case where signal levels are extremely different, harmful noises are not possibly mixed with each other.

The connector blocks 115, 124 for fluid may be accommodated in the lowermost portion of the connector units 113, 122. Oils or the like leaked from the connector blocks 115, 124 can be discharged outside through a drain outlet 122d without entering the connector blocks 114, 114, 123, 123 for electricity.

Fig. 7 shows an another embodiment wherein the shield member 125 partitions the connector blocks 123, 123 for electricity not only to define the front surface of the connector unit 122 of the movable portion 10 but define the front surface of the connector unit 122 for each connector block including the connector block 124 for fluid, and accordingly, even if fluid should be jetted out of the connector blocks 115, 124 for fluid, the connector blocks 114, 114, 123, 123 for electricity can be protected.

In the aforementioned explanation, the connector blocks 115, 124 for fluid may be either hydraulic or pneumatic, and these may not be included in the fixed portion 20 and the movable portion 10. Furthermore, the kind and number of the connector blocks 114, 123, 115 and 124 may be suitably combined other than the illustrated, as the case may be.

While in the connector blocks 114, 123 for electricity, the fixed portion 20 side is the male side having the connector pins 114a, 114a ... and the movable 10 side is the female side having the connector sockets 123a, 123a ..., it is to be noted that this setting may be reversed. Preferably, the connector block 114 is held by a floating construction in place of the connector block 123. Further, the connector pins 114a, 114a ..., connector sockets 123a, 123a ... may be of the floating construction with respect to the connector blocks 114, 123.

## Claims

1. A connecting device comprising a movable portion (10) provided on a machining table (MT) of a machine tool and a fixed portion (20) provided on the side of a pallet (P), said movable portion (10) being disposed to be movable forward and backward on said machining table by means of a driving unit (130) for connecting said fixed portion (20) and said movable portion (10), said fixed portion (20) being formed to be detachable with respect to said movable portion (10) and connected to an attachment on the pallet (P), said movable portion (10) and said fixed portion (20) being formed with a plurality of connectors (124, 123) for fluid and electricity, **characterized in that**,
said plurality of connectors of said movable portion (10) are separated by means of shield members (125) and said connectors for fluid (124) are arranged in a low-lying position to avoid a wrong connection and to avoid the entering of fluid into electricity connectors (123).

2. A connector device according to Claim 1, wherein said connector blocks are each formed by an insulator provided with a connector pin or a connector socket for electric connection.

3. A connector device according to Claim 1, wherein said connector blocks are each formed with a receiving and inserting joining portion for communication of fluid.

4. A connector device according to any of Claims 1 to 3, wherein said drive unit comprises a supersonic motor and a ball threaded shaft connected to said motor, said threaded shaft being screwed into a mount member, said mount member having a movable portion provided with connector blocks mounted thereon.

5. A connector device according to Claim 1, wherein said connector blocks are mounted on the movable portion or the fixed portion by a floating construction.

## Patentansprüche

1. Eine Anschlußvorrichtung mit einem bewegbaren Abschnitt (10), angeordnet auf einem Maschinentisch (MT) einer Werkzeugmaschine, und mit einem Halteabschnitt (20) an der Seite einer Palette (P), wobei der bewegbaren Abschnitt (10) so angeordnet ist, um vorwärts und rückwärts auf dem Maschinentisch bewegbar zu sein durch eine Antriebseinheit (130) zum Verbinden des Halteabschnitts (20) und des bewegbaren Abschnitts (10), wobei der Halteabschnitt (20) lösbar in bezug auf den bewegbare Abschnitt (10) ausgebildet und verbunden zu einer Befestigung auf der Palette (P) ist, der bewegbare Abschnitt (10) und der Halteabschnitt (20) sind ausgebildet mit einer Mehrzahl von Verbindungsblocks (124, 123) für Flüssigkeit und Elektrizität, **dadurch gekennzeichnet, daß** die Mehrzahl von Verbindungsblocks des bewegbaren Abschnitts (10) voneinander durch ein Schildteil (125) getrennt sind und die Verbindungsblocks für Flüssigkeit (124) in einer tiefliegenden Position angeordnet sind, um eine Fehlverbindung zu verhindern und um ein Eintreten von Füssigkeit in die elektrischen Verbindungsblocks (123) zu verhindern.

2. Eine Anschlußvorrichtung nach Patentanspruch 1, **dadurch gekennzeichnet, daß** die Verbindungsblocks (123) jeder aus einem Isolator gebildet sind, der mit einem Verbindungsstift oder einer Verbindungbuchse für eine elektrische Verbindung versehen ist.

3. Eine Anschlußvorrichtung nach Patentanspruch 1, **dadurch gekennzeichnet, daß** die Verbindungsblocks jeder mit einem Aufnahme - und Einführ-Verbindungsabschnitt für eine Flüssigkeitsverbindung ausgebildet sind.

4. Eine Anschlußvorrichtung nach einem der Patentansprüche 1 bis 3, **dadurch gekennzeichnet, daß** die Antriebseinheit einen Ultraschall-Motor und eine mit dem Motor verbundene Kugelspindel aufweist, wobei die Kugelspindel in einem Montageteil gedreht wird, das einen beweglichen Abschnitt mit daran montierten Verbindungsblocks hat.

5. Eine Anschlußvorrichtung nach Patentanspruch 1, **dadurch gekennzeichnet, daß** die Verbindungsblocks an dem beweglichen Abschnitt oder an dem festen Abschnitt mittels einer Schwimm-Konstruktion befestigt sind.

## Revendications

1. Dispositif de connexion comprenant une partie mobile (10) disposée sur une table d'usinage (MT) d'une machine-outil et une partie fixe (20) disposée sur le côté d'une palette (P), ladite partie mobile (10) étant disposée pour être mobile vers l'avant et vers l'arrière sur ladite table d'usinage au moyen d'un organe d'entraînement (130) pour connecter ladite partie fixe (20) et ladite partie mobile (10), ladite partie fixe (20) étant conçue pour être détachable par rapport à ladite partie mobile (10) et connectée à une fixation sur la palette (P), ladite partie mobile (10) et ladite partie fixe (20) étant munies d'une pluralité de connecteurs (124, 123) pour fluide et électricité, caractérisé en ce que ladite pluralité de connecteurs de ladite partie mobile (10) sont séparés au moyen d'éléments de blindage (125) et lesdits connecteurs pour fluide (124) sont disposés à un emplacement bas afin d'éviter une mauvaise connexion et afin d'éviter l'entrée de fluide dans les connecteurs pour électricité (123).

2. Dispositif à connecteur selon la revendication 1, dans lequel lesdits blocs de connecteur sont chacun constitués d'un isolant muni d'une broche de connecteur ou d'une douille de connecteur pour la connexion électrique.

3. Dispositif à connecteur selon la revendication 1, dans lequel lesdits blocs de connecteur sont chacun constitués d'une partie de jonction d'insertion et de réception pour la communication de fluide.

4. Dispositif à connecteur selon l'une quelconque des revendications 1 à 3, dans lequel ledit organe d'entraînement comprend un moteur supersonique et un arbre fileté à billes connecté audit moteur, ledit arbre fileté à billes étant vissé dans un élément de montage, ledit élément de montage présentant une partie mobile sur laquelle sont montés des blocs de connecteur.

5. Dispositif à connecteur selon la revendication 1, dans lequel lesdits blocs de connecteur sont montés sur la partie mobile ou la partie fixe au moyen d'une structure flottante.
